# EUROPÄISCHE PATENTANMELDUNG

(11) **EP 3 666 401 A1**
(43) Veröffentlichungstag der Anmeldung: **17.06.2020**
(21) Anmeldenummer: 18212582.3
(22) Anmeldetag: 14.12.2018
(51) Int. Cl.: B05C 17/01, B05C 17/005, B01F 13/00

(54) **VERFAHREN ZUM BETREIBEN EINES AUSPRESSSYSTEMS UND AUSPRESSSYSTEM**

(71) Anmelder: Hilti Aktiengesellschaft, 9494 Schaan (LI)
(72) Erfinder: Kuhn, Martin, 82110 Germering (DE); Hefele, Christian, 87739 Breitenbrunn (DE)
(74) Vertreter: Hilti Aktiengesellschaft Corporate Intellectual Property

(57) **Zusammenfassung**

Es wird ein Verfahren zum Betreiben eines Auspresssystems beschrieben, wobei die Kartuscheneinrichtung mit wenigstens zwei Kartuschen ausgebildet ist. Es ist eine Auspresseinrichtung mit wenigstens zwei mit unterschiedlichen Vorschubgeschwindigkeiten betreibbaren Auspresskolben vorgesehen. Das Verfahren umfasst folgende Schritte:
- Hinterlegen eines Verhältnisses von Vorschubgeschwindigkeiten der Auspresskolben in einer Speichereinrichtung der Steuerungseinrichtung in Abhängigkeit des zweiten Signals (S5);
- Ansteuerung der wenigstens einen Antriebseinrichtung von der Steuerungseinrichtung zur Verlagerung der beiden Auspresskolben in eine Startposition, in der ein Stempel des ersten Auspresskolbens im Wesentlichen in Anlage mit der ersten Kartusche der Kartuscheneinrichtung und in der ein Stempel des zweiten Auspresskolbens im Wesentlichen in Anlage mit der zweiten Kartusche der Kartuscheneinrichtung ist (S7)
- Ansteuerung der wenigstens einen Antriebseinrichtung von der Steuerungseinrichtung mit einem in der Speichereinrichtung der Steuerungseinrichtung hinterlegten Verhältnis aus Vorschubgeschwindigkeiten für die Auspresskolben bei anwenderseitiger Anforderung (S10).

Es wird weiterhin ein Auspresssystem zum Betreiben eines derartigen Verfahrens beschrieben.

## Beschreibung

Die Erfindung betrifft ein Verfahren zum Betreiben eines ein Auspressgerät und eine Kartuscheneinrichtung umfassenden Auspresssystems gemäß dem Oberbegriff des Patentanspruches 1. Weiterhin betrifft die Erfindung ein Auspresssystem zur Durchführung eines derartigen Verfahrens gemäß dem Gegenstand des Patentanspruches 7.

Auspressgeräte werden beispielsweise im Baubereich zum Auspressen von Silikon oder anderen flüssigen bzw. zähflüssigen Baustoffen aus Kartuscheneinrichtungen verwendet. Dabei sind auch Auspressgeräte bekannt, die zum Aufnehmen von Kartuscheneinrichtungen ausgeführt sind, die zwei Kammern aufweisen. Derartige Kartuscheneinrichtungen können dabei beispielsweise eine Zwei- oder Mehrkomponenten-Mörtelmasse beinhalten, wobei in einer Kammer bzw. Kartusche der Kartuscheneinrichtung eine härtbare Harzkomponente und in einer weiteren davon reaktionsinhibierend getrennt angeordneten Kammer bzw. Kartusche der Kartuscheneinrichtung eine Härterkomponente angeordnet ist. Kartuscheneinrichtungen mit derartigen Zweikomponenten-Mörtelmassen werden beispielsweise als Injektionsmörtel für die chemische Verankerung beispielsweise von Metallelementen in mineralischen Untergründen, wie insbesondere Bauwerken aus Ziegelwerk, Beton oder Naturstein, eingesetzt. Dabei werden zunächst die entsprechend an die zur Befestigung der Verankerungsmittel erforderlichen Bohrlöcher in den mineralischen Untergrund eingebracht, wonach die härtbare Harzkomponente mit der Härterkomponente der Zweikomponenten-Mörtelmasse vermischt und in das Bohrloch eingebracht wird, worauf das zu befestigende Verankerungsmittel eingeführt und justiert wird, wonach die Mörtelmasse aushärtet.

Der typische Aufbau eines solchen Auspressgeräts sieht an einer Schubstange angeordnete Auspresskolben vor, die jeweils einen Stempel in einer Vorschubrichtung in Richtung der Ausgabeöffnung der jeweiligen Kartusche bzw. Kammer der Kartuscheneinrichtung bewegen können. Der jeweilige Stempel wirkt dabei mit jeweils einer Kartusche zusammen und presst den Inhalt der jeweiligen Kartusche in Richtung der Ausgabeöffnung. Die Schubstange wird über einen gemeinsamen Antriebsmechanismus angetrieben.

Für verschiedene Rezepturen von Zweikomponenten-Mörtelmassen sind verschiedene Mischverhältnisse der Komponenten in den einzelnen Kartuschen der Kartuscheneinrichtung erforderlich. Üblicherweise wird dies durch das Auspressen von Kartuschen mit identischer Antriebsgeschwindigkeit und unterschiedlichen Durchmessern erreicht.

Um einen fehlerfreien Betrieb zu gewährleisten, ist es erforderlich, dass die jeweils verwendete Kartuscheneinrichtung auf das Auspressgerät abgestimmt ist und das Auspressgerät in einem auf die verwendete Kartuscheneinrichtung abgestimmten Betriebsmodus betrieben wird. Bei Verwendung von nicht aufeinander abgestimmten Kombinationen aus Kartuscheneinrichtung und Auspressgerät kann es einerseits zur Beschädigung der Kartuscheneinrichtung oder zur Beschädigung des Auspressgeräts kommen oder andererseits ein für die aktuell verwendete Kartuscheneinrichtung unerwünschtes Mischungsverhältnis zwischen den in den Kartuschen befindlichen Komponenten kommen.

Es ist Aufgabe der Erfindung ein Verfahren zum Betreiben eines Auspresssystems, das mit unterschiedlichen Vorschubgeschwindigkeiten von Auspresskolben betreibbar ist, und ein Auspresssystem zur Durchführung eines derartigen Verfahrens bereitzustellen, mit denen auf einfache und sichere Weise eine Beschädigung der eingesetzten Kartuscheneinrichtung und/oder des verwendeten Auspressgeräts zuverlässig verhinderbar ist und ein gewünschtes Mischungsverhältnis zwischen in den Kartuschen befindlichen Komponenten auf einfache Weise erzielbar ist.

Diese Aufgabe wird mit einem Verfahren zum Betreiben eines ein Auspressgerät und eine Kartuscheneinrichtung umfassenden Auspresssystems gelöst. Die Kartuscheneinrichtung ist mit wenigstens zwei Kartuschen bzw. zwei separaten Kammern ausgebildet und das Auspressgerät ist ausgeführt mit einem Aufnahmeraum zur Aufnahme der Kartuscheneinrichtung, einer Auspresseinrichtung mit wenigstens zwei mit unterschiedlichen Vorschubgeschwindigkeiten betreibbaren Auspresskolben, von denen jeder Auspresskolben zum Zusammenwirken mit einer Kartusche ausgeführt ist, einer Steuerungseinrichtung, wenigstens einer Antriebseinrichtung und einer Energieversorgung. Die Aufgabe wird dadurch gelöst, dass das Verfahren folgende Schritte umfasst:
- Einführen der Kartuscheneinrichtung in den Aufnahmeraum;
- Aussenden wenigstens eines ersten Signals von einem Signalgeber der Kartuscheneinrichtung;
- Empfangen des wenigstens einen Signals der Kartuscheneinrichtung mittels wenigstens eines Sensors des Auspressgeräts;
- Senden eines zweiten Signals von dem Sensor an die Steuerungseinrichtung;
- Hinterlegen eines Verhältnisses von Vorschubgeschwindigkeiten der Auspresskolben in einer Speichereinrichtung der Steuerungseinrichtung in Abhängigkeit von dem zweiten Signal;
- Ansteuerung der wenigstens einen Antriebseinrichtung von der Steuerungseinrichtung zur Verlagerung der beiden Auspresskolben in eine Startposition, in der ein Stempel des ersten Auspresskolbens im Wesentlichen in Anlage mit der ersten Kartusche der Kartuscheneinrichtung, und in der ein Stempel des zweiten Auspresskolbens im Wesentlichen in Anlage mit der zweiten Kartusche der Kartuscheneinrichtung ist; und
- Ansteuerung der wenigstens einen Antriebseinrichtung von der Steuerungseinrichtung mit einem in der Speichereinrichtung der Steuerungseinrichtung hinterlegten Verhältnis aus Vorschubgeschwindigkeiten für die Auspresskolben bei anwenderseitiger Anforderung.

Mit dem erfindungsgemäßen Verfahren ist auf einfache Weise sicherstellbar, dass bei einer anwenderseitigen Anforderung bzw. einer Betätigung eines hierfür vorgesehenen Schalters an dem Auspressgerät die Auspresskolben mit einem auf die verwendete Kartuscheneinrichtung abgestimmten Verhältnis aus Vorschubgeschwindigkeiten für die Auspresskolben betrieben wird und hierdurch ein gewünschtes Mischverhältnis zwischen den in den Kartuschen befindlichen Massen erzielt wird. Weiterhin ist mit dem erfindungsgemäßen Verfahren die Gefahr einer Beschädigung der Kartuscheneinrichtung und/oder des Auspressgeräts sicher verhindert, da mit dem erfindungsgemäßen Verfahren sichergestellt ist, dass die Positionierung der Auspresskolben in der Startposition und die Betätigung der Auspresskolben bei anwenderseitiger Anforderung auf die jeweils verwendete Kartuscheneinrichtung abgestimmt ist. Weiterhin können die Auswirkungen nutzerseitiges Fehlverhalten auf die Funktionsfähigkeit der Kartuscheneinrichtung und/oder des Auspressgeräts reduziert oder unterbunden werden. Zudem kann auf einfache Weise erkannt werden, ob ein kompatibles Auspresssystem vorliegt, d. h., ob die Kartuscheneinrichtung zur Verwendung in dem Auspressgerät geeignet ist. Auch dies reduziert die Gefahr einer Beschädigung der eingesetzten Kartuscheneinrichtung und/oder des Auspressgeräts.

Mit dem vorgeschlagenen Verfahren können verschiedene Mischverhältnisse der Komponenten in den einzelnen Kartuschen der Kartuscheneinrichtung durch unterschiedlichen Antriebsgeschwindigkeiten der zwei oder mehr Vorschubstangen realisiert werden. Hierdurch sind auch bei der Verwendung von identischen Kartuscheneinrichtungen, verschiedene Mischverhältbnisse von in den Kartuschen bzw. Kammern enthaltenen Komponenten erzielbar. Hierdurch werden sowohl die Kosten der Kartuscheneinrichtungen reduziert als auch die Anwendung vereinfacht.

Mittels des erfindungsgemäßen Verfahrens kann ein gewünschtes Mischverhältnis von sich in den Kartuschen bzw. Kammern der Kartuscheneinrichtung befindlichen Materialien auf einfache Weise eingestellt werden. Das erzielte Mischverhältnis ergibt sich in Abhängigkeit von Querschnitten, insbesondere Durchmessern der jeweiligen Kartuschen bzw. Kammern in Zusammenhang mit einem Verhältnis der jeweiligen Vorschubgeschwindigkeiten der Auspresskolben. Die Kartuschen können dabei einen voneinander abweichenden Querschnitt, insbesondere einen voneinander abweichenden Durchmesser aufweisen. Insbesondere kann es vorgesehen sein, dass die Kartuschen ein Längenverhältnis in Vorschubrichtung der Auspresskolben aufweisen, das im Wesentlichen dem Verhältnis der Vorschubgeschwindigkeiten der Auspresskolben entspricht. Hierdurch wird erreicht, dass beide Kartuschen im Wesentlichen gleichzeitig leer sind.

Zur Erzielung von voneinander abweichenden Mischverhältnissen der Komponenten in den Kartuschen einer Kartuscheneinrichtung sind verschiedene Bauarten von Kartuscheneinrichtungen in den Aufnahmeraum des Auspressgeräts einsetzbar. In den Aufnahmeraum des Auspressgeräts einsetzbare Kartuscheneinrichtungen weisen jeweils wenigstens zwei Kartuschen auf, die von denen eine Kartusche jeweils einen ersten Querschnitt und eine weitere Kartusche einen zweiten Querschnitt aufweisen. Verschiedene Kartuscheneinrichtungen unterscheiden sich insbesondere lediglich hinsichtlich der Länge der einzelnen Kartuschen in Vorschubrichtung der Auspresskolben. Durch eine entsprechende Wahl von Längenverhältnissen der Kartuschen ist auf einfache Weise bei einem gewünschten Mischverhältnis erzielbar, dass beide Kartuschen im Wesentlichen gleichzeitig aufgebraucht sind.

Wenn eine Kartusche sämtlicher eingesetzter Kartuscheneinrichtungen eine feste Länge in Vorschubrichtung des Auspresskolbens aufweist, kann bei einer vorteilhaften Ausführungsform des erfindungsgemäßen Verfahrens die Steuerungseinrichtung auf einfache Weise die Startposition der jeweiligen Auspresskolben aus dem in der Speichereinrichtung hinterlegten Verhältnis von Vorschubgeschwindigkeiten der Auspresskolben ermitteln.

Eine vorteilhafte Ausführungsform ist durch das Aussenden wenigstens eines dritten Signals von dem Signalgeber der Kartuscheneinrichtung gekennzeichnet, welches eine Startposition der jeweiligen Auspresskolben in der Speichereinrichtung hinterlegt. Hierdurch können die Stempel der Auspresskolben durch eine entsprechende Ansteuerung der wenigstens einen Antriebseinrichtung automatisiert in die jeweilige Startposition gebracht werden.

Es kann vorgesehen sein, dass von dem Signalgeber der Kartuscheneinrichtung wenigstens ein viertes Signal ausgesendet wird, welches die Antriebseinrichtung in einen Deaktivierungzustand einstellt, d. h., die Antriebseinrichtung in diesen Zustand versetzt wird oder in diesem verbleibt, wenn das vierte Signal einen in der Steuereinrichtung hinterlegten Schwellwert überschreitet oder außerhalb eines festgelegten Bereichs liegt. Hierdurch kann beispielsweise auf einfache Weise eine Verlagerung der Auspresskolben bei anwenderseitiger Anforderung verhindert werden, wenn ein Ablaufdatum der Kartuscheneinrichtung überschritten ist oder ein auf der Kartuscheneinrichtung hinterlegter zulässiger Temperaturbereich nicht vorliegt.

Bei einer bevorzugten Ausführungsform wird durch einen Warnsignalgeber ein Warnsignal ausgesendet, wenn das zweite Signal keinem in der Steuerungseinrichtung hinterlegten Wert entspricht. Dem Anwender kann hierdurch beispielsweise auf akustische, visuelle oder haptische Weise mitgeteilt werden, wenn eine nicht mit dem Auspressgerät kompatible Kartuscheneinrichtung vorliegt oder ein für die Kartuscheneinrichtung erforderliches Mischverhältnis von dem Auspressgerät nicht umsetzbar ist.

Ein derartiges Warnsignal durch einen Warnsignalgeber kann auch oder zusätzlich hierzu ausgesendet werden, wenn die Antriebseinrichtung durch das vierte Signal in den Deaktivierungszustand eingestellt wird und/oder das vierte Signal einen in der Steuerungseinrichtung hinterlegten Schwellwert überschreitet.

Es wird weiterhin ein Auspresssystem zur Durchführung eines derartigen Verfahrens vorgeschlagen, wobei das Auspresssystem mit einem Auspressgerät und einer Kartuscheneinrichtung ausgeführt ist, die mit wenigstens zwei Kartuschen ausgebildet ist und das Auspressgerät ausgeführt ist mit einem Aufnahmeraum zur Aufnahme der Kartuscheneinrichtung, einer Auspresseinrichtung mit wenigstens zwei mit unterschiedlichen Vorschubgeschwindigkeiten betreibbaren Auspresskolben, von denen jeder Auspresskolben zum Zusammenwirken mit einer Kartusche ausgebildet ist, einer Steuerungseinrichtung, wenigstens einer Antriebseinrichtung und einer Energieversorgung.

Mit dem erfindungsgemäßen Auspresssystem ist auf einfache Weise sicherstellbar, dass bei einer anwenderseitigen Anforderung bzw. einer Betätigung eines hierfür vorgesehenen Betätigungsschalters an dem Auspressgerät durch einen Anwender die Auspresskolben mit einem auf die verwendete Kartuscheneinrichtung abgestimmten Verhältnis aus Vorschubgeschwindigkeiten für die Auspresskolben betrieben werden. Hierdurch ist die Gefahr einer Beschädigung der Kartuscheneinrichtung und/oder des Auspressgeräts sicher verhindert. Weiterhin können gegebenenfalls die Auswirkungen nutzerseitiges Fehlverhalten auf die Funktionsfähigkeit der Kartuscheneinrichtung und/oder des Auspressgeräts reduziert oder unterbunden werden. Zudem kann auf einfache Weise erkannt werden, ob ein kompatibles Auspresssystem vorliegt, d. h., ob die Kartuscheneinrichtung zur Verwendung in dem Auspressgerät geeignet ist. Auch dies reduziert die Gefahr einer Beschädigung der eingesetzten Kartuscheneinrichtung und/oder des Auspressgeräts.

Um eine Signalübertragung zwischen der Kartuscheneinrichtung und dem Auspressgerät auf konstruktiv einfache Weise umzusetzen, kann eine drahtlose Übertragungseinrichtung mit einem der Kartuscheneinrichtung zugeordneten Signalgeber und wenigstens einem dem Auspressgerät zugeordneten Sensor vorgesehen sein. Mittels der Übertragungseinrichtung ist eine Signalübertragung von der Kartuscheneinrichtung auf das Auspressgerät möglich und ein Auspressvorgang hierdurch hinsichtlich der jeweils verwendeten Kartuscheneinrichtung optimierbar.

Bei einer bevorzugten Ausführung ist die drahtlose Übertragungseinrichtung eine optische Übertragungseinrichtung oder eine Funkübertragungseinrichtung. Die Übertragungseinrichtung kann dabei auf verschieden Funktionsprinzipien und/oder Standards basieren. Die Funktionsweise der Übertragungseinrichtung kann sowohl auf einer Signalübertragung im Radiofrequenzbereich beispielsweise mittels Ultrakurzwelle, Kurzwelle oder Mittelwelle als auch auf einer Signalübertragung im infraroten oder optischen Frequenzbereich basieren. Insbesondere ist die Übertragungseinrichtung als RFID-Übertragungseinrichtung, als Bluetooth-Übertragungseinrichtung, als NFC-Übertragungseinrichtung, als WiFi-Übertragungseinrichtung, als QR-Übertragungseinrichtung oder als DMC-Übertragungseinrichtung ausgeführt. Weiterhin kann die Übertragungseinrichtung als WLAN-Übertragungseinrichtung, als ZigBee-Übertragungseinrichtung, als Wibree-Übertragungseinrichtung, WiMAX-Übertragungseinrichtung, als IrDA-Übertragungseinrichtung oder als nach optischem Richtfunk arbeitende Übertragungseinrichtung ausgeführt sein.

Eine Übertragung des von der Kartuscheneinrichtung ausgesendeten und von dem wenigstens einen Sensor empfangenen Signals an die Steuerungseinrichtung wird bei einer einfach umzusetzenden Weiterbildung dadurch erreicht, dass eine weitere Übertragungseinrichtung zwischen dem wenigstens einen Sensor und der Steuerungseinrichtung vorgesehen ist, die drahtgebunden oder drahtlos ausgeführt ist.

Die weitere Übertragungseinrichtung kann prinzipiell vergleichbar zur der Übertragungseinrichtung ausgeführt sein und beispielsweise als RFID-Übertragungseinrichtung, als Bluetooth-Übertragungseinrichtung, als NFC-Übertragungseinrichtung, als WiFi-Übertragungseinrichtung, als QR-Übertragungseinrichtung oder als DMC-Übertragungseinrichtung ausgeführt sein. Weiterhin kann die Übertragungseinrichtung als WLAN-Übertragungseinrichtung, als ZigBee-Übertragungseinrichtung, als Wibree-Übertragungseinrichtung, WiMAX-Übertragungseinrichtung, als IrDA-Übertragungseinrichtung oder als nach optischem Richtfunk arbeitende Übertragungseinrichtung ausgeführt sein.

Um eine Interaktion mit einem Anwender auf konstruktiv einfache Weise erzielen zu können, ist bei einer vorteilhaften Ausführung eine Ausgabeeinrichtung an einem Gehäuse des Auspressgeräts vorgesehen. Die Ausgabeeinrichtung kann beispielsweise als Warneinrichtung ausgeführt sein, die zur Ausgabe von optischen, akustischen und/oder haptischen Signalen ausgeführt ist. Die Ausgabeeinrichtung kann hierbei beispielsweise eine an dem Auspressgerät angeordnete Anzeigeeinrichtung vorzugsweise in Form eines Displays umfassen. Alternativ oder zusätzlich hierzu kann es vorgesehen sein, dass die Ausgabeeinrichtung Teil einer Übertragungseinrichtung ist, die beispielsweise zur drahtlosen Verbindung mit einer separaten Anzeigeeinrichtung, beispielsweise einem Mobilfunkgerät bzw. einem Smartphone, ausgeführt ist.

Bei einer vorteilhaften Ausführung weist das Auspressgerät wenigstens eine zum wenigstens temporären Speichern des ersten Signals, des zweiten Signals, des dritten Signals und/oder des vierten Signals ausgeführte auslesbare Speichereinrichtung auf. Die Speichereinrichtung ist vorzugsweise über eine Ausgabeeinrichtung auslesbar, so dass auf der Speichereinrichtung hinterlegte Daten auswertbar sind.

Um verschiedene Verhältnisse von Vorschubgeschwindigkeiten der beiden Auspresskolben auf einfache Weise erzielen zu können, ist bei einer konstruktiv einfachen Ausführung eine Getriebeeinrichtung vorgesehen, die zur Einstellung von verschiedenen Verhältnissen von Vorschubgeschwindigkeiten des ersten Auspresskolbens zu dem zweiten Auspresskolben ausgeführt ist, wobei die Auspresskolben von einer gemeinsamen Antriebseinrichtung betätigbar sind. Dadurch, dass die verschiedenen Verhältnisse von Vorschubgeschwindigkeiten mittels einer einzigen Antriebseinrichtung umsetzbar sind, ist hierbei ein kostengünstig umsetzbares Auspresssystem geschaffen.

Bei einer hierzu alternativen Ausführung sind zwei Antriebseinrichtungen vorgesehen, wobei eine erste Antriebseinrichtung zur Betätigung des ersten Auspresskolbens und eine zweite Antriebseinrichtung zur Betätigung des zweiten Auspresskolbens ausgeführt ist. Hierdurch ist eine besonders genaue und stufenlose Einstellung eines Verhältnisses von Vorschubgeschwindigkeiten zwischen dem ersten Auspresskolben und dem zweiten Auspresskolben erzielt.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und sinnvollen weiteren Kombinationen zusammenfassen.

In den Figuren sind gleiche und gleichartige Komponenten mit gleichen Bezugszeichen beziffert.

Es zeigen:
- Fig. 1: eine vereinfachte dreidimensionale Darstellung eines Auspressgerätes eines Auspresssystems;
- Fig. 2: eine vereinfachte Seitenansicht des Auspressgerätes des Auspresssystems gemäß Fig. 1
- Fig. 3: eine dreidimensionale Darstellung einer zum Zusammenwirken mit dem Auspressgerät gemäß Fig. 1 und Fig. 2 ausgeführten Kartuscheneinrichtung des Auspresssystems, wobei die Kartuscheneinrichtung mit zwei Kartuschen ausgeführt ist;
- Fig. 4: eine schematische Darstellung des Auspressgeräts gemäß Fig. 1 und Fig. 2 mit in einem Aufnahmeraum des Auspressgeräts angeordneter Kartuscheneinrichtung;
- Fig. 5: eine Fig. 4 entsprechende Ansicht des Auspresssystems, wobei die Auspresskolben der Auspresseinrichtung in eine Startposition verlagert sind;
- Fig. 6: eine Fig. 4 und Fig. 5 entsprechende Ansicht des Auspresssystems, während einer anwenderseitigen Betätigung des Auspressgeräts;
- Fig. 7: eine Fig. 4 bis Fig. 6 entsprechende Ansicht des Auspresssystems nach einer im Wesentlichen vollständigen Entleerung von Kartuschen der Kartuscheneinrichtung; und
- Fig. 8: eine vereinfachte Darstellung eines Ablaufdiagramms einer Ausführungsform eines erfindungsgemäßen Verfahrens zum Betreiben des Auspresssystems gemäß Fig. 1 bis Fig. 7.

### Ausführungsbeispiel:

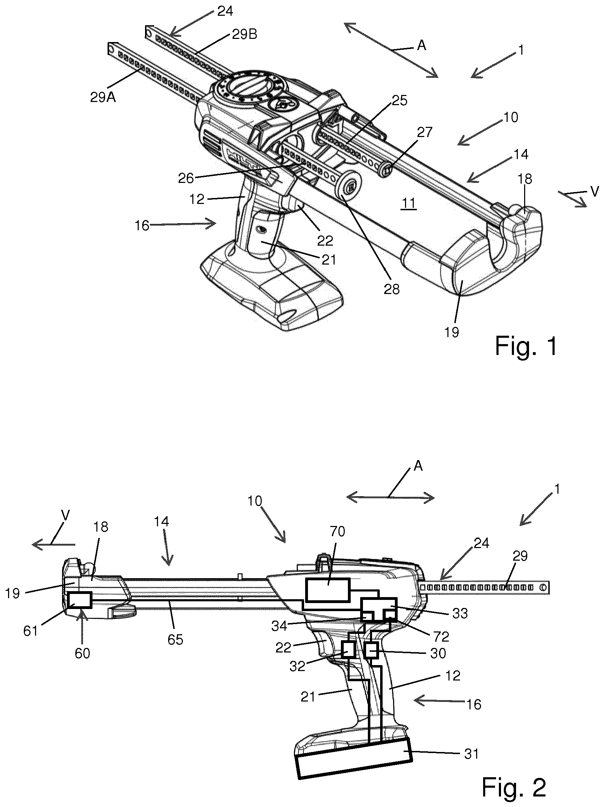

Ein bevorzugtes Ausführungsbeispiel eines erfindungsgemäßen Auspresssystems 1 ist in Fig. 1 bis Fig. 7 dargestellt, wobei in Fig. 1 und Fig. 2 ein Auspressgerät 10 des Auspresssystems 1 und in Fig. 2 eine Kartuscheneinrichtung 40 des Auspresssystems 1 gezeigt ist.

Das Auspressgerät 10 ist vorliegend zur Auspressen von mehrkomponentigen Massen ausgeführt, wobei die Massen beispielsweise zum Verfüllen, Kleben oder Abdichten oder dergleichen Anwendungen im Baubereich vorgesehen sein können.

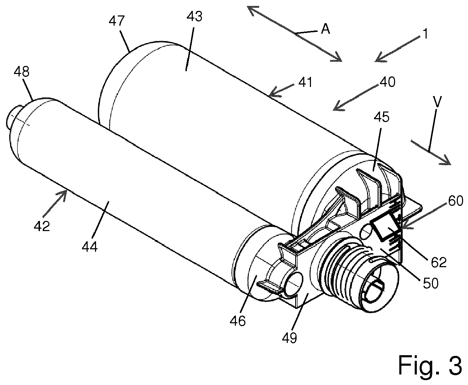

Vorliegend ist das Auspressgerät 10 zum Zusammenwirken mit einer in Fig. 3 gezeigten Kartuscheneinrichtung 40 ausgeführt, die zwei als Kartuschen 41 und 42 ausgeführte Behältnissen aufweist. Die Kartuscheneinrichtung 40 ist in einem Aufnahmeraum 11 eines Gehäuses 12 des Auspressgeräts 10 anordenbar und kann beispielsweise eine Zweikomponenten-Mörtelmasse beinhalten. In einer Kammer bzw. Kartusche 41 der Kartuscheneinrichtung 40 kann dabei eine härtbare Harzkomponente und in der weiteren, davon reaktionsinhibierend getrennt angeordneten Kammer bzw. Kartusche 42 der Kartuscheneinrichtung 40 eine Härterkomponente angeordnet sein. Die nach einer Vermischung der härtbaren Harzkomponente und der Härterkomponente entstehende Masse wird beispielsweise als Injektionsmörtel für die chemische Verankerung beispielsweise von Metallelementen in mineralischen Untergründen, wie insbesondere Bauwerken aus Ziegelwerk, Beton oder Naturstein, eingesetzt. Dabei werden zunächst die entsprechend an die zur Befestigung der Verankerungsmittel erforderlichen Bohrlöcher in den mineralischen Untergrund eingebracht, wonach die härtbare Harzkomponente mit der Härterkomponente der Zweikomponenten-Mörtelmasse vermischt und in das Bohrloch eingebracht wird, worauf das zu befestigende Verankerungsmittel eingeführt und justiert wird und die Mörtelmasse anschließend aushärtet.

Das Gehäuse 12 des Auspressgeräts 10 erstreckt sich vorliegend im Wesentlichen entlang einer axialen Richtung A und hat einen Funktionsabschnitt 14 und einen Handhabungsabschnitt 16. Der Funktionsabschnitt 14 weist im Wesentlichen den Aufnahmeraum 11 und an einem bearbeitungsseitigen distalen Ende 18 des Funktionsabschnitts 14 einen Bearbeitungskopf 19 auf, in den hinein sich eine nicht näher dargestellte Auspressöffnung der Kartuschen 41, 42 erstreckt. Aus den Kartuschen 41, 42 abgegebene Massen werden insbesondere in einem Mischbereich 49 der Kartuscheneinrichtung 40 gemischt und am bearbeitungsseitigen distalen Ende 18 des Funktionsabschnitts 14 an eine zu bearbeitende Stelle abgegeben.

Der Handhabungsabschnitt 16 des Gehäuses 12 weist neben einem Haltegriff 21 einen im Bereich des Haltegriffs 21 angeordneten Betätigungsschalter 22 auf, der beispielsweise als sogenannter MOSFET-Schalter ausgeführt sein kann. Zum Auspressen der Kartuschen 41, 42 ist eine Auspresseinrichtung 24 vorgesehen, die vorliegend mit zwei Auspresskolben 25, 26 ausgeführt ist, die vorliegend jeweils mit einer Schubstange 29A bzw. 29B fest verbunden sind. Jeder Auspresskolben 25, 26 weist an seinem der jeweiligen Kartusche 41 bzw. 42 zugewandten Ende einen Stempel 27 bzw. 28 auf.

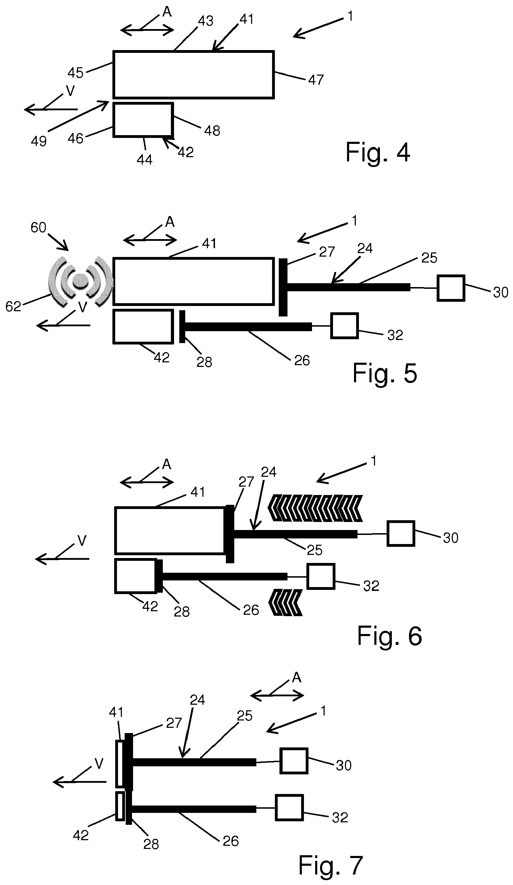

Es sind weiterhin zwei insbesondere als Elektromotor 30 bzw. 32 ausgeführte und in Fig. 5 bis Fig. 7 stark schematisiert gezeigte Antriebseinrichtungen vorgesehen, wobei der Elektromotor 30 zur Verlagerung des Auspresskolbens 25 mittels der Schubstange 29A in axialer Richtung A und der Elektromotor 32 zur Verlagerung des Auspresskolbens 26 mittels der Schubstange 29B in axialer Richtung A ausgeführt ist. Um in den Kartuschen 41, 42 befindliche Massen über die Auspressöffnungen aus den Kartuschen 41, 42 auszuführen, sind die Auspresskolben 25, 26 über die von den Elektromotoren 30, 32 in einer Vorschubrichtung V antreibbaren Schubstangen 29A bzw. 29B individuell ansteuerbar in Richtung des distalen Endes 18 bewegbar.

Die Elektromotoren 30 und 32 werden vorliegend von einer als Akkumulator 31 ausgeführten Energieversorgung mit Energie versorgt. Alternativ hierzu kann das Auspressgerät 10 auch netzbetrieben sein, wobei ein mit einem Stromnetz koppelbarer Stecker vorgesehen sein kann. Das Auspressgerät 10 weist weiterhin eine Steuerungseinrichtung 33 auf, welche zur Betätigung der Elektromotoren 30 und 32 nach einer anwenderseitigen Anforderung mittels des Betätigungsschalters 22 ausgeführt ist.

Die Elektromotoren 30, 32 können von der Steuerungseinrichtung 33 in verschiedene Betriebsmodi versetzt werden, wobei ein Deaktivierungsmodus vorgesehen ist, in dem kein Strom von dem Akkumulator 31 zu den Elektromotoren 30, 32 geführt wird und eine Betätigung des Betätigungsschalters 22 nicht zu einer Verlagerung der Schubstangen 29A und 29B führt. Die Elektromotoren 30, 32 sind weiterhin in einen Betriebsmodus versetzbar, in dem eine anwenderseitige Betätigung des Betätigungsschalters 22 zu einer Verlagerung der Auspresskolben 25 und 26 in Vorschubrichtung V mit einer jeweils angepassten Geschwindigkeit führt.

Die Kartuschen 41, 42 der Kartuscheneinrichtung 40 weisen vorliegend jeweils einen im Wesentlichen zylindrischen Grundkörper 43 bzw. 44 mit einer ersten Stirnwand 45 bzw. 46 und einer gegenüberliegenden zweiten Stirnwand 47 bzw. 48 auf. An der ersten Stirnwand 45 bzw. 46 ist jeweils eine Ausgabeöffnung vorgesehen, die über den Mischbereich 49 miteinander verbunden sind. An den Mischbereich 49 ist beispielsweise eine Ausgabeeinrichtung in Form einer Tülle anbindbar. Die zweite Stirnwand 47 bzw. 48 ist zum Zusammenwirken mit dem Stempel 27 bzw. 28 des jeweiligen Auspresskolbens 25 bzw. 26 ausgeführt, wobei bei einer Verlagerung des Auspresskolbens 25 bzw. 26 in Vorschubrichtung V in Richtung der ersten Stirnwand 45 bzw. 46 ein Volumen des Grundkörpers 43 bzw. 44 der jeweiligen Kartusche 41 bzw. 42 verringert wird, sodass die jeweilige Masse in den Kartuschen 41 und 42 durch die Ausgabeöffnung ausgeführt, in dem Mischbereich 49 miteinander vermischt und über die Ausgabeeinrichtung herausgepresst wird.

Das Auspresssystem 1 weist weiterhin eine Übertragungseinrichtung 60 auf, die wenigstens einen an dem Auspressgerät 10 angeordneten Sensor 61 und einen an der Kartuscheneinrichtung 40 angeordneten Signalgeber 62 aufweist. Die Übertragungseinrichtung 60 ist drahtlos ausgeführt und kann mittels vielfältiger Übertragungsprinzipien arbeiten. Insbesondere handelt es sich um eine RFID-Übertragungseinrichtung, allerdings kann es sich alternativ hierzu beispielsweise auch um eine Bluetooth-Übertragungseinrichtung, eine NFC-Übertragungseinrichtung, eine WiFi-Übertragungseinrichtung, eine QR-Übertragungseinrichtung, eine DMC-Übertragungseinrichtung, eine WLAN-Übertragungseinrichtung, eine ZigBee-Übertragungseinrichtung, eine Wibree-Übertragungseinrichtung, eine WiMAX-Übertragungseinrichtung, eine IrDA-Übertragungseinrichtung oder eine nach optischem Richtfunk arbeitende Übertragungseinrichtung handeln.

Der Signalgeber 62 ist vorliegend an einer Stirnseite 50 des Mischbereichs 49 der Kartuscheneinrichtung 40 angeordnet, wohingegen der Sensor 61 derart an dem Gehäuse 12 des Auspressgeräts 10 angeordnet ist, dass der Signalgeber 62 der Kartuscheneinrichtung 40 bei in vorgeschriebener Weise in dem Aufnahmeraum 11 angeordneter Kartuscheneinrichtung 40 in Wechselwirkung mit dem Sensor 61 tritt und Signale von dem Signalgeber 62 an den Sensor 61 übertragbar sind. Der Sensor 61 ist hierzu beispielsweise im Bereich einer einen distalen Endbereich des Aufnahmebereichs 11 begrenzenden Wand des Gehäuses 12 angeordnet.

Der Sensor 61 ist mittels einer weiteren Übertragungseinrichtung 65 mit der Steuerungseinrichtung 33 gekoppelt, wobei die weitere Übertragungseinrichtung 65 drahtlos oder drahtgebunden ausgeführt sein kann. Die weitere Übertragungseinrichtung 65 kann auf Basis der gleichen Übertragungsmechanismen wie die Übertragungseinrichtung 60 ausgeführt sein.

Die Kartuschen 41 und 42 der Kartuscheneinrichtung 40 gemäß Fig. 2 weisen in axialer Richtung A jeweils eine im Wesentlichen identische Länge auf. Ein gewünschtes Mischungsverhältnis zwischen den in den Kartuschen 41 und 42 befindlichen Massen wird hierbei vorliegend durch eine Betätigung der Auspresskolben 25 und 26 durch den jeweiligen Elektromotor 30 bzw. 32 mit einer im Wesentlichen identischen Geschwindigkeit erzielt.

Die Kartuschen 41 und 42 der Kartuscheneinrichtung 40 gemäß Fig. 4 bis Fig. 7 weisen eine in axialer Richtung A unterschiedliche Länge auf, wobei die erste Kartusche 41 gemäß Fig. 4 vorliegend in axialer Richtung A länger als die zweite Kartusche 42 ausgeführt ist. Im gezeigten Beispiel ist die erste Kartusche 41 in axialer Richtung A beispielsweise dreimal so lange wie die zweite Kartusche 42. Um ein gewünschtes Mischverhältnis zwischen den in der ersten Kartusche 41 und in der zweiten Kartusche 42 befindlichen Massen zu erzielen, ist die erste Kartusche 41 vorliegend mit einer dreimal so großen Vorschubgeschwindigkeit des ersten Auspresskolbens 25 zu betätigen wie der Auspresskolben 26 der zweiten Kartusche 42.

In Fig. 5 sind die Auspresskolben 25, 26 jeweils in eine Startposition verfahren, wobei der Stempel 27 des ersten Auspresskolbens 25 im Wesentlichen in Anlage mit der ersten Kartusche 41 der Kartuscheneinrichtung 40 und der Stempel 28 des zweiten Auspresskolbens 26 im Wesentlichen in Anlage mit der zweiten Kartusche 42 der Kartuscheneinrichtung 40 ist.

Fig. 6 zeigt schematisch einen Zustand des Auspresssystems 1 während einer anwendungsseitigen Betätigung des Betätigungsschalters 22, in dem der Auspresskolben 25 die erste Kartusche 41 mit einer Vorschubgeschwindigkeit beaufschlagt, die dreimal so groß ist wie die Vorschubgeschwindigkeit, mit der der Auspresskolben 26 die zweite Kartusche 42 beaufschlagt. Das Verhältnis der Vorschubgeschwindigkeiten der Auspresskolben 25 und 26 entspricht dabei einem Verhältnis der Längen der Kartuschen 41 und 42.

Fig. 7 zeigt die Auspresskolben 25 und 26 jeweils in einer komplett ausgefahrenen Position, in der sowohl die erste Kartusche 41 als auch die zweite Kartusche 42 im Wesentlichen komplett ausgepresst ist.

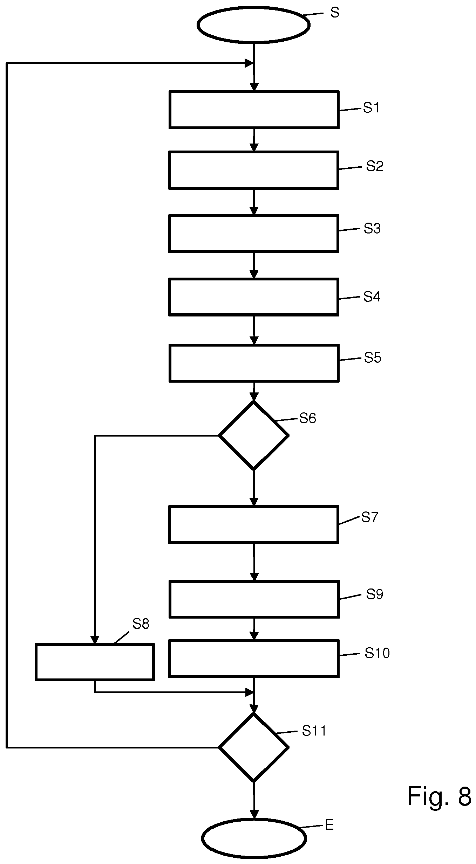

In Fig. 8 ist eine Ausführungsform eines Verfahrens nach der Erfindung zum Betreiben des Auspresssystems 1 gezeigt, wobei mittels des Verfahrens insbesondere eine auf die aktuell verwendete Kartuscheneinrichtung 40 abgestimmte Betätigung der Auspresskolben 25 und 26 einstellbar ist. Hierbei kann eine Fehleinstellung mit einer möglichen Beschädigung sowohl des Auspressgeräts 10 als auch der Kartuscheneinrichtung 40 sicher verhindert werden.

Das Verfahren beginnt mit dem Start S. Im Schritt S1 wird die Kartuscheneinrichtung 40 in den Aufnahmeraum 11 eingelegt. In Schritt S2 sendet der Signalgeber 62 der Kartuscheneinrichtung 40 ein erstes Signal aus, welches die Kartuscheneinrichtung 40 insbesondere hinsichtlich der Länge der einzelnen Kartuschen 41 und 42 näher spezifiziert. Weiterhin sendet die Kartuscheneinrichtung 40 vorliegend zusätzlich ein drittes Signal und ein viertes Signal aus, wobei das dritte Signal eine Startposition der jeweiligen Auspresskolben 25 und 26 spezifiziert. Das vierte Signal beinhaltet beispielsweise ein Haltbarkeitsdatum der Kartuscheneinrichtung 40, einen zulässigen Temperaturbereich an Umgebungsbereich für die Verarbeitung oder dergleichen. Die von der Kartuscheneinrichtung 40 ausgesendeten Signale werden von dem Sensor 61 des Auspressgeräts 10 in Schritt S3 bei in vorgeschriebener Weise in dem Aufnahmeraum 11 angeordneter Kartuscheneinrichtung 40 empfangen.

Daraufhin werden in Schritt S4 dem ersten Signal, dem dritten Signal und dem vierten Signal entsprechende bzw. aus dem ersten Signal, dem dritten Signal und dem vierten Signal generierte zweite Signale von dem Sensor 61 an die Steuerungseinrichtung 33 gesendet. Im darauffolgenden Schritt S5 wird ein in dem ersten Signal übermitteltes Verhältnis von Vorschubgeschwindigkeiten für die Auspresskolben 25 und 26 in einer Speichereinrichtung 34 der Steuerungseinrichtung 33 hinterlegt. Ebenso werden in der Speichereinrichtung 34 vorliegend die mit dem dritten Signal übermittelten Startpositionen für die Auspresskolben 25 und 26 hinterlegt.

Im Abfrageschritt S6 wird das mit dem vierten Signal korrelierende zweite Signal beispielsweise mit einer durch einen Temperatursensor ermittelten, aktuell vorliegenden Umgebungstemperatur verglichen und für den Fall, dass die aktuell vorliegende Umgebungstemperatur innerhalb eines zulässigen Temperaturbereichs für die Kartuscheneinrichtung 40 liegt, mit Schritt S7 fortgefahren. Alternativ oder zusätzlich hierzu kann im Abfrageschritt S5 verglichen werden, ob das aktuelle Datum vor dem zulässigen Haltbarkeitsdatum der Kartuscheneinrichtung 40 liegt. Bei positivem Ergebnis wird mit Abfrageschritt S7 fortgefahren.

Bei negativem Abfrageergebnis im Abfrageschritt S6 werden die Elektromotoren 30 und 32 von der Steuerungseinrichtung 33 in Schritt S8 in den Deaktivierungsmodus versetzt, so dass eine Betätigung des Betätigungsschalters 22 nicht zu einer Verlagerung der Schubstangen 29A und 29B und somit der Auspresskolben 25 und 26 führt.

Nach positivem Abfrageergebnis im Abfrageschritt S6 steuert im Schritt S8 die Steuerungseinrichtung 33 die Elektromotoren 30, 32 derart an, dass diese in die in der Speichereinrichtung 34 hinterlegten Startpositionen verfahren werden, in denen die Stempel 27 und 28 jeweils im Wesentlichen an der jeweiligen Kartusche 41 und 42 anliegen. Anschließend werden die Elektromotoren 30 und 32 im Schritt S9 von der Steuerungseinrichtung 33 jeweils in den Betriebsmodus überführt. Eine anschließende anwenderseitige Betätigung des Betätigungsschalters 22 führt im Schritt S10 zur Verlagerung der Auspresskolben 25, 26 durch die Elektromotoren 30, 32.

Im an die Schritte S8 und S10 anschließenden Abfrageschritt S11 wird abgefragt, ob sich zu definierende relevante Rahmenbedingungen in vorgegebenem Umfang geändert haben. Bei positivem Abfrageergebnis wird das Verfahren bei Schritt S1 fortgesetzt. Bei negativem Abfrageergebnis wird das Verfahren bei Schritt E beendet.

Mittels des Verfahrens zum Betreiben des Auspresssystems 1 ist auf einfache Weise sicherstellbar, dass die jeweils verwendete Kartuscheneinrichtung 40 im vorgesehenen Umfang von dem Auspressgerät 10 mit den vorgesehenen Vorschubgeschwindigkeiten der Auspresskolben 25 und 26 ausgepresst und ein gewünschtes Mischverhältnis der sich in den Kartuschen 41 und 42 befindlichen Massen erzielt wird. Weiterhin wird eine Beschädigung sowohl des Auspressgeräts 10 als auch der Kartuscheneinrichtung 40 verhindert, die bei herkömmlichen Auspresssystemen beispielsweise durch eine fehlerhafte Einstellung eines Verhältnisses von Vorschubgeschwindigkeiten von Auspresskolben auftreten könnte. Zudem ist durch die Übermittlung entsprechender Daten von der Kartuscheneinrichtung 40 auf das Auspressgerät 10 auf einfache Weise verhinderbar, dass die Kartuscheneinrichtung 40 bei definierbaren unzulässigen Rahmenbedingungen verwendet wird, die zu unerwünschten Bearbeitungsergebnissen führen können. Es kann zudem verhindert werden, dass durch eine fehlerhaft in dem Aufnahmeraum angeordnete Kartuscheneinrichtung 40 eine Beschädigung an der Kartuscheneinrichtung 40 und/oder dem Auspressgerät 10 auftritt, wenn der Signalgeber 62 und der Sensor 61 derart ausgeführt und angeordnet sind, dass eine Signalübertragung zwischen dem Signalgeber 62 und dem Sensor 61 nur stattfindet, wenn die Kartuscheneinrichtung 40 in vorgeschriebenem Umfang in dem Aufnahmeraum 11 angeordnet ist.

Das Auspressgerät 10 weist insbesondere eine Ausgabeeinrichtung 70 auf, die beispielsweise zur Ausgabe eines Warnsignals in optischer, akustischer und/oder haptischer Weise ausgeführt ist, wenn die Elektromotoren 30 und 32 von der Steuerungseinrichtung 33 in Schritt S9 in den Betriebsmodus überführt werden. Die Steuerungseinrichtung 33 kann auch eine weitere Speichereinrichtung 72 aufweisen, welche zum wenigstens temporären Speichern des ersten Signals, des zweiten Signals, des dritten Signals und/oder des vierten Signals ausgeführt ist, und welche über eine Ausgabeeinrichtung auslesbar ist. Hierdurch können auf einfache Weise Nutzungsinformationen des Auspresssystems 1 ausgewertet werden.

### Bezugszeichenliste

- 1: Auspresssystem
- 10: Auspressgerät
- 11: Aufnahmeraum
- 12: Gehäuse
- 14: Funktionsabschnitt
- 16: Handhabungsabschnitt
- 18: distales Ende
- 19: Bearbeitungskopf
- 21: Haltegriff
- 22: Betätigungsschalter
- 24: Auspresseinrichtung
- 25: Auspresskolben
- 26: Auspresskolben
- 27: Stempel
- 28: Stempel
- 29A: Schubstange
- 29B: Schubstange
- 30: Antriebseinrichtung; Elektromotor
- 31: Energieversorgung; Akkumulator
- 32: Antriebseinrichtung; Elektromotor
- 33: Steuerungseinrichtung
- 34: Speichereinrichtung
- 40: Kartuscheneinrichtung
- 41: erste Kartusche
- 42: zweite Kartusche
- 43: Grundkörper
- 44: Grundkörper
- 45: erste Stirnwand
- 46: erste Stirnwand
- 47: zweite Stirnwand
- 48: zweite Stirnwand
- 49: Mischbereich
- 50: Stirnseite
- 60: Übertragungseinrichtung
- 61: Sensor
- 62: Signalgeber
- 65: weitere Übertragungseinrichtung
- 70: Ausgabeeinrichtung
- 72: weitere Speichereinrichtung
- A: axiale Richtung
- V: Vorschubrichtung

## Patentansprüche

1. Verfahren zum Betreiben eines ein Auspressgerät (10) und eine Kartuscheneinrichtung (40) umfassenden Auspresssystems (1), wobei die Kartuscheneinrichtung (40) mit wenigstens zwei Kartuschen (41, 42) ausgebildet ist und das Auspressgerät (10) ausgeführt ist mit einem Aufnahmeraum (11) zur Aufnahme der Kartuscheneinrichtung (40), einer Auspresseinrichtung (24) mit wenigstens zwei mit unterschiedlichen Vorschubgeschwindigkeiten betreibbaren Auspresskolben (25, 26), von denen jeder Auspresskolben (25, 26) zum Zusammenwirken mit einer Kartusche (41, 42) ausgeführt ist, einer Steuerungseinrichtung (33), wenigstens einer Antriebseinrichtung (30, 32) und einer Energieversorgung (31),
**dadurch gekennzeichnet, dass** das Verfahren folgende Schritte umfasst:
- Einführen der Kartuscheneinrichtung (40) in den Aufnahmeraum (11) (S1);
- Aussenden wenigstens eines ersten Signals von einem Signalgeber (62) der Kartuscheneinrichtung (40) (S2);
- Empfangen des wenigstens einen Signals der Kartuscheneinrichtung (40) mittels wenigstens eines Sensors (61) des Auspressgeräts (10) (S3);
- Senden eines zweiten Signals von dem Sensor (61) an die Steuerungseinrichtung (33) (S4);
- Hinterlegen eines Verhältnisses von Vorschubgeschwindigkeiten der Auspresskolben (25, 26) in einer Speichereinrichtung (34) der Steuerungseinrichtung (33) in Abhängigkeit des zweiten Signals (S5);
- Ansteuerung der wenigstens einen Antriebseinrichtung (30, 32) von der Steuerungseinrichtung (33) zur Verlagerung der beiden Auspresskolben (25, 26) in eine Startposition, in der ein Stempel (27) des ersten Auspresskolbens (25) im Wesentlichen in Anlage mit der ersten Kartusche (41) der Kartuscheneinrichtung (40) und in der ein Stempel (28) des zweiten Auspresskolbens (26) im Wesentlichen in Anlage mit der zweiten Kartusche (42) der Kartuscheneinrichtung (40) ist (S7);
- Ansteuerung der wenigstens einen Antriebseinrichtung (30, 32) von der Steuerungseinrichtung (33) mit einem in der Speichereinrichtung (34) der Steuerungseinrichtung (33) hinterlegten Verhältnis aus Vorschubgeschwindigkeiten für die Auspresskolben (25, 26) bei anwenderseitiger Anforderung (S10).

2. Verfahren nach Anspruch 1,
**dadurch gekennzeichnet, dass** die Steuerungseinrichtung (33) die Startposition der jeweiligen Auspresskolben (25, 26) aus dem in der Speichereinrichtung (34) hinterlegten Verhältnis von Vorschubgeschwindigkeiten der Auspresskolben (25, 26) ermittelt.

3. Verfahren nach einem der Ansprüche 1 oder 2,
**gekennzeichnet, durch** das Aussenden wenigstens eines dritten Signals von dem Signalgeber (62) der Kartuscheneinrichtung (40), welches eine Startposition der jeweiligen Auspresskolben (25, 26) in der Speichereinrichtung (34) hinterlegt.

4. Verfahren nach einem der Ansprüche 1 bis 3,
**gekennzeichnet, durch** das Aussenden wenigstens eines vierten Signals von dem Signalgeber (62) der Kartuscheneinrichtung (40), welches die wenigstens eine Antriebseinrichtung (30, 32) in einen Deaktivierungszustand einstellt (S8), wenn das vierte Signal größer als ein in der Steuereinrichtung (33) hinterlegter Schwellwert ist (S6).

5. Verfahren nach einem der Ansprüche 1 bis 4,
**gekennzeichnet, durch** Aussenden eines Warnsignals durch einen Warnsignalgeber (70), wenn das zweite Signal keinem in der Steuerungseinrichtung (33) hinterlegten Wert entspricht.

6. Verfahren nach einem der Ansprüche 4 oder 5,
**gekennzeichnet, durch** Aussenden eines Warnsignals durch einen Warnsignalgeber (70) wenn die Antriebseinrichtung (30, 32) durch das vierte Signal in den Deaktivierungszustand eingestellt wird.

7. Auspresssystem (1) zur Durchführung eines Verfahrens nach einem der Ansprüche 1 bis 6 mit einem Auspressgerät (10) und einer Kartuscheneinrichtung (40), wobei die Kartuscheneinrichtung (40) mit wenigstens zwei Kartuschen (41, 42) ausgebildet ist und das Auspressgerät (10) ausgeführt ist mit einem Aufnahmeraum (11) zur Aufnahme der Kartuscheneinrichtung (40), einer Auspresseinrichtung (24) mit wenigstens zwei mit unterschiedlichen Vorschubgeschwindigkeiten betreibbaren Auspresskolben (25, 26), von denen jeder Auspresskolben (25, 26) zum Zusammenwirken mit einer Kartusche (41, 42) ausgeführt ist, einer Steuerungseinrichtung (33), wenigstens einer Antriebseinrichtung (30, 32) und einer Energieversorgung (31).

8. Auspresssystem nach Anspruch 7,
**dadurch gekennzeichnet, dass** eine drahtlose Übertragungseinrichtung (60) mit einem der Kartuscheneinrichtung (40) zugeordneten Signalgeber (62) und wenigstens einem dem Auspressgerät (10) zugeordneten Sensor (61) vorgesehen ist.

9. Auspresssystem nach Anspruch 8,
**dadurch gekennzeichnet, dass** die drahtlose Übertragungseinrichtung (60) eine optische Übertragungseinrichtung oder eine Funkübertragungseinrichtung ist und insbesondere als RFID-Übertragungseinrichtung, als Bluetooth-Übertragungseinrichtung, als NFC-Übertragungseinrichtung, als WiFi-Übertragungseinrichtung, als QR-Übertragungseinrichtung, als DMC-Übertragungseinrichtung, als WLAN-Übertragungseinrichtung, als ZigBee-Übertragungseinrichtung, als Wibree-Übertragungseinrichtung, WiMAX-Übertragungseinrichtung, als IrDA-Übertragungseinrichtung oder als nach optischem Richtfunk arbeitende Übertragungseinrichtung ausgeführt ist.

10. Auspresssystem nach einem der Ansprüche 8 oder 9,
**dadurch gekennzeichnet, dass** der wenigstens eine Sensor (61) mittels einer weiteren Übertragungseinrichtung (65) mit der Steuerungseinrichtung (33) verbunden ist, wobei die weitere Übertragungseinrichtung (65) drahtgebunden oder drahtlos ausgeführt ist

11. Auspresssystem nach Anspruch 10,
**dadurch gekennzeichnet, dass** die weitere Übertragungseinrichtung (65) als RFID-Übertragungseinrichtung, als Bluetooth-Übertragungseinrichtung, als NFC-Übertragungseinrichtung, als WiFi-Übertragungseinrichtung, als QR-Übertragungseinrichtung, als DMC-Übertragungseinrichtung, als WLAN-Übertragungseinrichtung, als ZigBee-Übertragungseinrichtung, als Wibree-Übertragungseinrichtung, WiMAX-Übertragungseinrichtung, als IrDA-Übertragungseinrichtung oder als nach optischem Richtfunk arbeitende Übertragungseinrichtung ausgeführt ist.

12. Auspresssystem nach einem der Ansprüche 7 bis 11,
**dadurch gekennzeichnet, dass** eine Ausgabeeinrichtung (70) an einem Gehäuse (12) des Auspressgeräts (10) vorgesehen ist.

13. Auspresssystem nach einem der Ansprüche 7 bis 12,
**dadurch gekennzeichnet, dass** eine Getriebeeinrichtung vorgesehen ist, die zur Einstellung von verschiedenen Verhältnissen von Vorschubgeschwindigkeiten des ersten Auspresskolbens (25) zu dem zweiten Auspresskolben (26) ausgeführt ist, wobei die Auspresskolben (25, 26) von einer gemeinsamen Antriebseinrichtung betätigbar sind.

14. Auspresssystem nach einem der Ansprüche 7 bis 12,
**dadurch gekennzeichnet, dass** zwei Antriebseinrichtungen (30, 32) vorgesehen sind, wobei eine erste Antriebseinrichtung (30) zur Betätigung des ersten Auspresskolbens (25) und eine zweite Antriebseinrichtung (32) zur Betätigung des zweiten Auspresskolbens (26) ausgeführt ist.
